# EUROPÄISCHE PATENTSCHRIFT

(11) **EP 3 449 729 B1**
(45) Veröffentlichungstag und Bekanntmachung des Hinweises auf die Patenterteilung: **11.03.2020**
(21) Anmeldenummer: 18191964.8
(22) Anmeldetag: 31.08.2018
(51) Int. Cl.: A22C 11/02

(54) **VORRICHTUNG ZUM BESTÜCKEN EINES FÜLLROHRS UND BETREFFENDES BESTÜCKUNGSVERFAHREN**
DEVICE FOR FEEDING A STUFFING HORN AND FEEDING RELATED METHOD
DISPOSITIF DE MONTAGE D'UN TUBE DE REMPLISSAGE ET PROCÉDÉ DE MONTAGE CORRESPONDANT

(30) Priorität: 31.08.2017 DE 102017120098
(43) Veröffentlichungstag der Anmeldung: 06.03.2019
(73) Patentinhaber: VEMAG Maschinenbau GmbH, 27283 Verden/Aller (DE)
(72) Erfinder: Mach, Matthias, 30539 Hannover (DE); Hagedorn, Jan-Nils, 27283 Verden (DE); Matthies, Heiner, 27419 Kalbe (DE); Grote, Olaf, 27324 Eystrup (DE); Lewin, Alexander, 27283 Verden (DE)
(74) Vertreter: Eisenführ Speiser

(56) Entgegenhaltungen:
- EP-A1- 0 110 343
- EP-A1- 3 075 251
- EP-A2- 2 384 634
- DE-A1-102008 026 095

## Beschreibung

Die Erfindung betrifft eine Vorrichtung zum Bestücken eines Füllrohrs mit einer gerafften, schlauchförmigen Hülle, mit einer Zuführeinrichtung zum Zuführen einer gerafften, schlauchförmigen Hülle zu einer Hüllengreifeinrichtung, einer Hüllengreifeinrichtung mit Greifelementen zum Greifen und Ausrichten einer gerafften, schlauchförmigen Hülle sowie einem axial zu einer Füllrohr- Längsachse bewegbaren Aufschieber zum Aufschieben der Hülle auf das Füllrohr. Die Erfindung betrifft ferner ein Verfahren zum Bestücken eines Füllrohrs mit einer gerafften, schlauchförmigen Hülle.

Derartige Vorrichtungen und Verfahren zum Bestücken eines Füllrohrs mit einer gerafften, schlauchförmigen Hülle, sind im Stand der Technik bekannt. Zur industriellen Wurstproduktion sind Vorrichtungen vorbekannt, bei denen eine zu füllende, schlauchförmige Hülle in einem gerafften Zustand (auch als Darmraupe oder geraupter Darm bezeichnet) automatisiert auf ein Füllrohr aufgebracht wird. An dessen offenen Ende tritt sodann Wurstbrät aus und wird in die auf dem Füllrohr aufgebrachte schlauchförmige Hülle abgegeben. Durch abschnittsweises Verschließen der Hüllen, beispielsweise durch abschnittsweises Verdrehen gegeneinander oder durch andere Maßnahmen wird der kontinuierliche Hüllenstrang nach der Füllung mit Wurstbrät in einzelne Würste separiert. Beispielsweise offenbart EP 2 384 634 A2 eine Vorrichtung zum Greifen eines Darms, insbesondere einer gerafften Darmraupe für eine Füllmaschine. Des Weiteren ist in EP 0 110 343 A1 ein Verfahren zum taktweisen Beschicken des Füllrohrs einer Wurstfüll- und -verschließmaschine mit füllfertigen Schlauchhüllenabschnitten offenbart.

Zur Beschleunigung des Herstellungsprozesses sind im Stand der Technik Füllvorrichtungen offenbart, bei denen mehrere, insbesondere zwei Füllrohre auf einem parallel zur Füllrohrlängsachse rotierbaren Grundkörper mit einem Aufnahmeteil angeordnet sind, wobei das Aufnahmeteil zusammen mit den Füllrohren revolverartig rotierbar ist. Mittels einer solchen Anordnung werden die Beschickungen des Füllrohrs mit einer gerafften, schlauchförmigen Hülle und die eigentliche Befüllung der Hülle in unterschiedlichen Betriebspositionen ausgeführt.

Das Aufbringen der gerafften, schlauchförmigen Hülle auf das Füllrohr in einer sogenannten Beschickungsposition ist bei Vorrichtungen, welche aus dem Stand der Technik vorbekannt sind, weiter automatisiert. So ist insbesondere vorbekannt, dass die gerafften, schlauchförmigen Hüllen mittels Magazinschiebern aus einem Magazin entnommen werden und mittels der Greifer anschließend so vor dem Füllrohr positioniert werden, dass die Hülle auf das Füllrohr aufgeschoben werden kann, insbesondere mittels eines Aufschiebers.

Nach dem Aufschieben der Darmraupe auf das Füllrohr wird dieses in eine Füllposition rotiert. In dieser Füllposition erfolgt das Befüllen der gerafften, schlauchförmigen Hüllen.

Die aus dem Stand der Technik vorbekannten Vorrichtungen ermöglichen es, Füllrohre mit gerafften, schlauchförmigen Hüllen automatisiert zu bestücken. Allerdings wirkt sich nachteilig beim beschriebenen Stand der Technik aus, dass fehlerhafte Beladungen der Greifeinrichtung mit einer Hülle nur unzureichend feststellbar sind. Auch sind die vorbekannten Vorrichtungen nicht dazu in der Lage, den Durchmesser der verwendeten Hüllen (Darmraupen) zu ermitteln. Vielmehr ist der Darmraupendurchmesser durch den Bediener einzustellen, welches eine potenzielle Fehlerquelle darstellt. Darüber hinaus ist bei den im Stand der Technik bekannten Vorrichtungen die Maximallänge der Füllrohre und damit die verarbeitbare maximale Hüllenlänge begrenzt.

Vor diesem Hintergrund lag der Erfindung die Aufgabe zugrunde, eine Vorrichtung und ein Verfahren der eingangs bezeichneten Art dahingehend weiterzubilden, dass die im Stand der Technik aufgefundenen Nachteile möglichst weitgehend behoben werden. Insbesondere sollen eine Vorrichtung zum Bestücken eines Füllrohres und ein betreffenden Verfahren angegeben werden, welche insgesamt die Produktionsprozesssicherheit erhöhen, den Anlagenbediener entlasten, und die Verwendung unterschiedlich langer Hüllen ermöglichen.

Erfindungsgemäß wird die Aufgabe bei einer Vorrichtung der eingangs genannten Art gelöst durch eine den Greifelementen zugeordnete Detektiereinrichtung zur Sensierung der Position mindestens eines der Greifelemente.

Weiterhin wird die Aufgabe erfindungsgemäß bei einem Verfahren der eingangs genannten Art gelöst durch die Schritte: Öffnen eines oberen und/ oder eines unteren Greifelements einer Hüllengreifeinrichtung; Zuführen einer gerafften, schlauchförmigen Hülle zu dem unteren Greifelement; Schließen der Greifelemente der Hüllengreifeinrichtung; Sensierung der Position mindestens eines Greifelementes; Ermittlung des Durchmessers der zugeführten Hülle auf Basis der sensierten Position des oder der Greifelemente.

Eine solche Detektiereinrichtung ermöglicht eine Sensierung der für den Füllrohr-Bestückungsprozess besonders relevanten Position der Greifelemente. Aus der Kenntnis der Position der Greifelemente, insbesondere wenn sich diese in einem Zustand befinden, bei dem das obere Greifelement und das untere Greifelement in Kontakt mit der Hülle stehen, wird ermöglicht, Rückschlüsse auf den Durchmesser der Hülle, fehlerhafte Beladungen der Greifelemente, und dergleichen mehr, zu gewinnen. Ferner erlaubt die Kenntnis weiterer zu sensierender Größen, wie beispielsweise Schließkräfte der Greifelemente und dergleichen mehr, vertiefende Informationen über fehlerfreie und fehlerhafte Bestückungsvorgänge zu gewinnen.

Die Erfindung wird dadurch weitergebildet, dass die Detektiereinrichtung mindestens einen Drehgeber zur Sensierung der Position mindestens eines der Greifelemente aufweist. Die Verwendung eines solchen Drehgebers zur Ermittlung der Position der Greifelemente ermöglicht es, den Sensor so anordnen zu können, dass dieser nicht in unmittelbarer Nähe der zu verarbeiteten Lebensmittel anzuordnen ist, sondern geschützt, insbesondere an einer umhausten Position. Eine Beeinträchtigung der Sensorfunktion durch eventuelle Verschmutzungen, welche aus dem Produktionsprozess resultieren können, wird somit vermieden.

Zusätzlich oder alternativ wird bevorzugt, dass die Greifelemente einen Antrieb mit einem Rotor aufweisen, wobei der Antrieb zur Übermittlung der Position des Rotors an die Detektiereinrichtung eingerichtet ist. Hierbei wird die Detektiereinrichtung gewissermaßen in den Antrieb integriert. Hierdurch lässt sich insgesamt der Bauraum reduzieren und ebenfalls eine sichere Abgrenzung zu dem Bereich der Vorrichtung sicherstellen, in dem Lebensmittel verarbeitet werden.

In einer alternativen Ausführungsform weist die Detektiereinrichtung einen optischen Sensor zur Sensierung der Position der Greifelemente auf. In Abhängigkeit vom avisierten Anwendungsfall, kann die Verwendung eines solchen optischen Sensors entweder im Rahmen einer alleinigen Verwendung oder in Kombination mit weiteren Sensoren angezeigt sein, um zusätzliche Informationen über den Bestückungsprozess zu erhalten, von anderen Sensoren ermittelter Signale zu prüfen, oder eine redundante Sensoranordnung bereitzustellen.

Die Vorrichtung wird dadurch weitergebildet, dass die Detektiereinrichtung einen Kraftsensor zur Ermittlung der an den Greifelementen auftretenden Kräfte eingerichtet ist. Ein solcher Kraftsensor ist dazu geeignet, Informationen bereitzustellen, die über eine Positionierung der Greifelemente hinausgehen. Insbesondere die Ermittlung von Schließkräften der Greifer ist besonders dazu geeignet, Fehlbeladungen der Greifelemente zu detektieren. Alternativ oder zusätzlich kann ein solcher Kraftsensor ebenfalls dem Aufschieber, der dem Aufschieben der Hülle auf das Füllrohr dient, zugeordnet sein. Aus der Sensierung der zum Aufschieben der Hülle auf das Füllrohr erforderlichen Kraft können ebenfalls Informationen abgeleitet werden, die auf ein korrektes oder auch fehlerhaftes Aufschieben der Hülle auf das Füllrohr schließen lassen.

Gemäß einer bevorzugten Weiterbildung weist die Vorrichtung eine mit der Detektiereinrichtung gekoppelte Steuerungseinrichtung auf, welche mindestens zur Bestimmung des Hüllendurchmessers eingerichtet ist. Eine solche Steuerungseinrichtung dient der Transformation der Sensordaten (beispielsweise Daten bezüglich der Position der Greifelemente oder beim Schließen der Greifelemente auftretende Kräfte) in Informationen, die auf vielfältige Weise nutzbar sind. Beispielsweise ermöglicht es die Steuerung, aus der Position des oberen Greifelements und der Position des unteren Greifelements den Durchmesser der von der Greifeinrichtung aufgenommenen Hülle zu bestimmen.

Erfindungsgemäß wird die Aufgabe bei einer Vorrichtung der eingangs genannten Art dadurch weitergebildet, dass ein Greifelement oder die Greifelemente dazu eingerichtet sind, dass Füllrohr abschnittsweise zum umschließen. Ein solches abschnittsweises Umschließen des Füllrohrs führt zu einer Stützung desselben. Insgesamt wird es damit möglich, längere Füllrohre zu verwenden, welches wiederum die Verarbeitung längerer Hüllen ermöglicht. Auch unterstützt eine derartige Auslegung und Anordnung der Greifelemente ein geführtes Aufschieben der Hüllen auf das Füllrohr und reduziert somit das Risiko von fehlerhaften Aufschiebevorgängen. Sobald die Hülle beim Aufziehvorgang auf das Füllrohr aufgebracht worden ist, übernehmen die Greifelemente (übertragend durch die Hülle) eine Zentrier- und Stützfunktion des Füllrohrs. Während des Aufbringens stützen und führen die Greifelemente die Hülle und die Hülle wiederum stützt und zentriert das Füllrohr.

Die Erfindung wird dadurch weitergebildet, dass die Greifelemente eine Vertiefung entlang Ihrer Längsachse zur Zentrierung und Ausrichtung einer Hülle aufweisen. Hierdurch wird die Hülle insgesamt sicher in der Mitte der Greifer positioniert und gehalten und es wird darüber hinaus möglich, leichte Biegungen und Verformungen der Hülle auszugleichen, sodass diese zentriert und gerade auf das Füllrohr aufschiebbar ist. Weiterhin wird bevorzugt, dass die Vertiefung bezogen auf eine Querachse der Greifelemente V-förmig ausgebildet ist. Eine solche V-Form hat sich als besonders geeignet herausgestellt, die Hülle sicher zu zentrieren und Unebenheiten und Verformungen derselben auszugleichen.

Die Erfindung wird dadurch weitergebildet, dass der Aufschieber dazu eingerichtet ist, mittels der Bewegung des Aufschiebers beim Aufschieben einer Hülle auf das Füllrohr, Verunreinigungen von den Greifelementen abzutragen. Die Greifelemente reinigen sich hierdurch bei jedem Darmaufziehvorgang selbst, da die aufzuschiebende Hülle mögliche Verschmutzungen (Brätreste) der Greifelemente mit abführt. Es wird somit vermieden, dass ein sicheres Greifen und Zentrieren der Hülle aufgrund von Verschmutzungen der Greifelemente eingeschränkt wird.

Bezugnehmend auf Verfahrensaspekte wird die Erfindung dadurch weitergebildet, dass das Verfahren weiterhin die Schritte aufweist: Ausrichtung und Zentrierung der Hülle relativ zur Axialrichtung eines Füllrohrs, wobei die Greifelemente das Füllrohr abschnittsweise umschließen; partielles Öffnen der Greifelemente; geführtes Aufschieben der Hülle auf das Füllrohr mittels eines Aufschiebers. Durch diese Verfahrensschritte findet während des Aufschiebens der Hülle auf das Füllrohr ein Stützen des Füllrohres durch die Hülle und die auf die Hülle wirkenden Greifelemente statt. Gleichzeitig wird die Hülle geführt auf das Füllrohr aufgeschoben. Insgesamt wird somit die Verwendung längerer Füllrohre aufgrund der Stützung möglich. Es wird gleichzeitig die Wahrscheinlichkeit reduziert, dass es zu einem fehlerhaften Aufschieben der Hüllen auf das Füllrohr kommt.

Darüber hinaus weist das Verfahren bevorzugt die Schritte auf: Schließen der Greifelemente der Hüllengreifeinrichtung, bis diese abschnittsweise mit dem Füllrohr in Kontakt treten; Sensierung der Position mindestens eines der Greifelemente; Ermittlung des Durchmessers des Füllrohrs auf Basis der sensierten Position der Greifelemente. Liegt folglich ein Zustand vor, bei dem sich keine Hülle auf den Greifelementen befindet, so können die Greifelemente dazu verwendet werden, automatisiert den Durchmesser des Füllrohrs zu bestimmen. Dieses dient insbesondere bei der Verwendung unterschiedlicher Füllrohrdurchmesser dazu, die Prozesssicherheit insgesamt dahingehend zu erhöhen, dass überprüft werden kann, inwieweit ein Füllrohr mit einem korrekten zum Hüllendurchmesser passenden Durchmesser verwendet wird.

Die Erfindung wird weitergebildet durch die Verfahrensschritte: Detektion einer fehlerhaften Beladung der Hüllengreifeinrichtung, insbesondere wenn keine Hülle in die Hüllengreifeinrichtung eingelegt ist, oder mehrere Hüllen von der Hüllengreifeinrichtung erfasst worden sind, oder eine Hülle fehlerhaft in die Hüllengreifeinrichtung eingelegt ist, oder der Hüllendurchmesser von einem vordefinierten Hüllendurchmesser abweicht. Die Detektion einer fehlerhaften Beladung der Hüllengreifeinrichtung kann insbesondere dazu verwendet werden, die Vorrichtung bei einer detektierten Fehlbeladung sogleich anzuhalten, um sicherzustellen, dass kein Ausschuss produziert wird. Dabei wird der Fehlerzustand insgesamt sehr schnell detektiert, womit Ausfallzeiten der Maschine reduziert werden.

Nachfolgend wird die Erfindung anhand eines bevorzugten Ausführungsbeispiels unter Bezugnahme auf die nachfolgenden Figuren näher beschrieben. Hierbei zeigen:
- Fig. 1:: eine perspektivische Ansicht einer Maschine zum Füllen schlauchförmiger Hüllen mit einer erfindungsgemäßen Bestückungsvorrichtung;
- Fig. 2:: eine Seitenansicht auf die Füllmaschine und die erfindungsgemäße Bestückungsvorrichtung nach Fig. 1;
- Fig. 3.: eine Draufsicht auf die Füllmaschine und die erfindungsgemäße Bestückungsvorrichtung nach Fig. 1;
- Fig. 4:: eine perspektivische Ansicht eines vergrößerten Ausschnitts der erfindungsgemäßen Bestückungsvorrichtung nach Fig. 1 und einer Füllvorrichtung zum Füllen schlauchförmiger Hüllen;
- Fig. 5-8:: perspektivische Ansichten wesentlicher Bauteile der Bestückungsvorrichtung nach Fig. 1 während der Abfolge aufeinanderfolgender Verfahrensschritte; und
- Fig. 9: eine Schnittansicht eines alternativen Ausführungsbeispiels einer Maschine zum Füllen schlauchförmiger Hüllen mit einer erfindungsgemäßen Bestückungsvorrichtung.

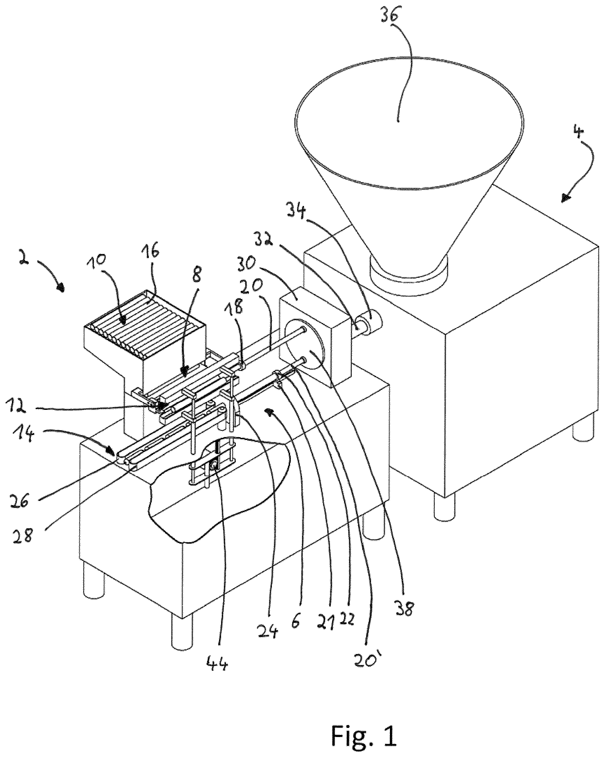

Die Figur 1 zeigt eine Füllmaschine 4 zum Füllen schlauchförmiger Hüllen 16, insbesondere von Kunst- oder Naturdärmen, in Verbindung mit einem Vorsatzgerät 2, dem eine Füllvorrichtung 6 und eine Füllrohrbestückungsvorrichtung 8 angeordnet sind. Die Maschine 4 weist ferner einen Fülltrichter 36 und einen Extrusionskopf 34 auf, der über ein Abgaberohr 32 mit einem Abdrehkopf 30 der Füllvorrichtung 6 medienleitend gekoppelt ist.

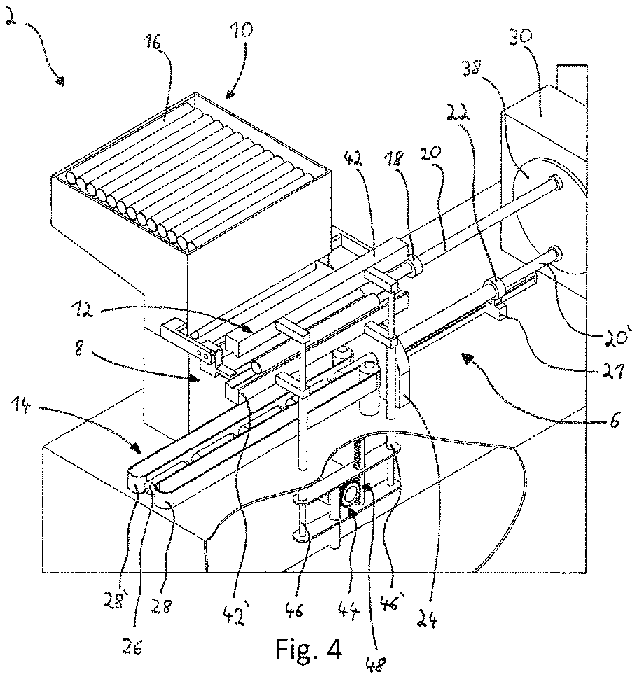

Die Füllrohrbestückungsvorrichtung 8 umfasst ein Hüllenmagazin 10 zur Aufnahme einer Vielzahl schlauchförmiger Hüllen 16 sowie eine Hüllengreifeinrichtung 12. Ferner ist an dem Vorsatzgerät 2 eine Fördereinrichtung 14 mit zwei im Abstand zueinander in einer horizontalen Ebene verlaufenden Förderelementen 28 sowie 28' (vgl. Fig. 4) angeordnet. Die Fördereinrichtung 14 dient dem Transport der von der Füllvorrichtung 6 hergestellten Würste 26.

Die Füllvorrichtung 6 dient dem Füllen der schlauchförmigen Hüllen 16 mittels der vom Extrusionskopf 34 geförderten pastösen Masse. Der Abdrehkopf 30 weist ein revolverartig drehbar aufgenommenes Aufnahmeteil 38 für zwei, jeweils wiederum dreh- und antreibbar am Aufnahmeteil 38 angeordnete Füllrohre 20, 20' auf. Das drehbare Aufnahmeteil 38 ist mit einer in der horizontalen Ebene verlaufenden Drehachse ausgebildet. Die Drehachse des als Schwenkplatte ausgebildeten Aufnahmeteils 38 und die Drehachse der Füllrohre 20, 20' verlaufen parallel zueinander. Ferner sind die Drehachsen der Füllrohre 20, 20' gleichmäßig von der Drehachse des Aufnahmeteils 38 beabstandet angeordnet. Damit ist ein vereinfachter Wechsel der Füllrohre 20, 20' zwischen den Positionen an der Füllvorrichtung 6 möglich. Auf das Füllrohr 20 wird in der oberen Position, der sogenannten Beschickungsposition, eine schlauchförmige Hüllen 16 aufgeschoben, und an dem Füllrohr 20' in der unteren Position, der sogenannte Füllposition, erfolgt bevorzugt gleichzeitig das Füllen einer auf dem Füllrohr 20' aufgeschobenen schlauchförmigen Hülle 16.

Dem in der oberen Beschickungsposition angeordneten Füllrohr 20 ist die Füllrohrbestückungsvorrichtung 8 mit ihrer Hüllengreifeinrichtung 12 zugeordnet. Die Hüllengreifeinrichtung 12 umfasst zwei relativ zueinander beweglich gehaltene Greifelemente, ein oberes Greifelement 42 sowie ein unteres Greifelement 42' (vgl. Fig. 4), mit denen eine schlauchförmige Hülle 16 von dem Hüllenmagazin 10 übernommen wird. Die Hülle 16 ist in der Hüllengreifeinrichtung 12 zumindest gehalten. Ein Antrieb der Greifelemente 42, 42' erfolgt mittels des Greiferantriebes 44.

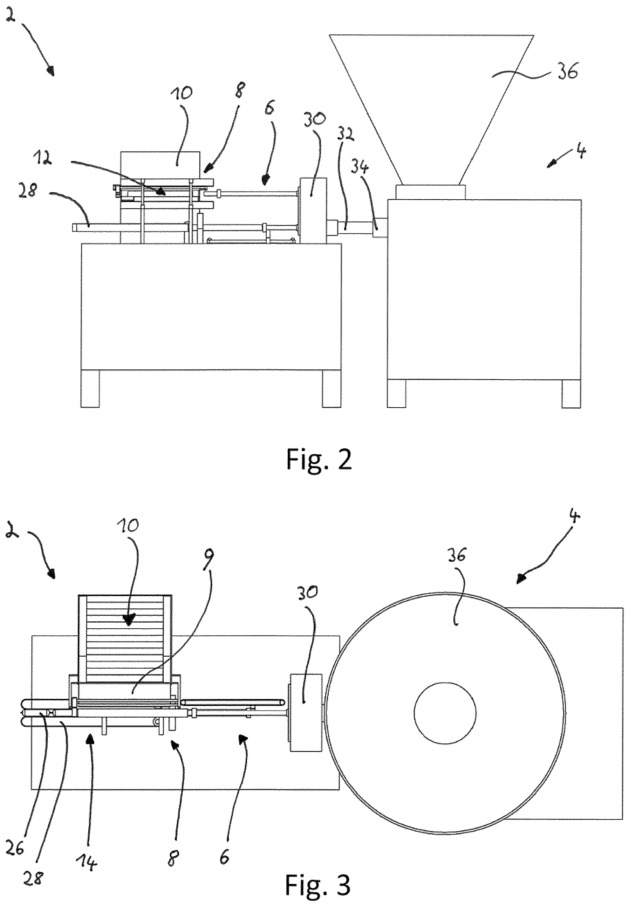

Dem in der Füllposition angeordneten Füllrohr 20' ist ein Darmbremssystem 24, auch bezeichnet als Hüllenbremssystem, zugeordnet, welches insbesondere bewirkt, dass die auf dem Füllrohr 20' aufgezogene Hülle 16 während des Befüllens derselben entrafft und damit kontrolliert vom Füllrohr 20' abgegeben wird. Gleichzeitig stellt das Darmbremssystem 24 sicher, dass die noch auf dem Füllrohr 20' verbliebene Hülle 16 während des Abdrehens der Hülle 16 und dem Erzeugen einer Abdrehstelle zwischen zwei aufeinanderfolgenden Strangabschnitten eines zu erzeugenden Stranges von Würsten 26 zusammen mit dem Füllrohr 20' um seine Drehachse gedreht wird. Die Figuren 2 und 3 zeigen eine Seitenansicht, bzw. eine Draufsicht der Füllvorrichtung gemäß Fig. 1.

In Fig. 4 ist die Hüllengreifeinrichtung 12 näher detailliert. Die Hüllengreifeinrichtung 12 weist ein oberes Greifelement 42 sowie ein unteres Greifelement 42' auf, welche über Greifergestänge 46, 46' angelenkt sind. Aus dem Hüllenmagazin 10 werden vereinzelte Hüllen 16 der Hüllengreifeinrichtung 12, insbesondere dem unteren Greifelement 42', zugeführt. Nach dem Zuführen einer Hülle 16 zu dem untere Greifelement 42' werden die Greifelemente 42, 42' solange geschlossen, bis das obere Greifelement 42 in Kontakt mit der Hülle tritt. Durch das Umschließen der Hülle 16 mittels der Greifelemente 42, 42' wird die Hülle 16 zentriert und eventuelle Verformungen zumindest teilweise ausgeglichen. Die Greifelemente 42, 42' umschließen ferner das Füllrohr 20. Da jedoch der Durchmesser der Hüllen 16 größer ist als der Durchmesser des Füllrohrs 20, treten die Greifelemente 42, 42' in keinen direkten Kontakt mit dem Füllrohr 20. Nach dem Ausrichten der Hülle 16 axial zum Füllrohr 20 werden die Greifelemente 42, 42' geringfügig geöffnet, sodass der Aufschieber 40 die Hülle 16 auf das Füllrohr 20 in Axialrichtung aufschieben kann. Während des Aufschiebens stützen und führen die Greifelemente 42, 42' die Hülle 16 und die Hülle 16 wiederum stützt und zentriert das Füllrohr 20. Durch das Aufschieben der Hülle 16 auf das Füllrohr 20 wird der Mitnehmerring 18 ebenfalls vorgeschoben. Die Greifelemente 42, 42' werden über die Greifergestänge 46, 46' angesteuert. Auf die Greifergestänge 46, 46' wiederum wirkt der Greiferantrieb 44. Dieser Greiferantrieb 44 ist insbesondere dazu eingerichtet, dass die Greifelemente 42, 42' so bewegt werden, dass eine Hülle 16 unabhängig von ihrem Durchmesser zentrisch zum Füllrohr 20 positioniert wird.

Eine Detektiereinrichtung 48 ist an dem Greiferantrieb 44 angeordnet. Diese Detektiereinrichtung 48 sensiert insbesondere die Position der Greifelemente 42, 42' sowie die beim Betrieb der Greifelemente 42, 42' auftretenden Kräfte. Hierbei kann die Detektiereinrichtung 48 dem Greiferantrieb 44 direkt zugeordnet sein, beispielsweise in Form einer Rückführung der Position des Rotors eines solchen Greiferantriebs 44, oder die Detektiereinrichtung kann dazu eingerichtet sein, Position und auftretende Kräfte der Greifelemente 42, 42' unmittelbar an den Greifelementen 42, 42' oder an den Greifergestängen 46,46' zu ermitteln.

Das Füllrohr 20' befindet sich in dem in Fig. 4 illustrierten Betriebszustand in einer Füllposition. Auf das Füllrohr 20' ist in Fig. 4 jedoch keine Hülle 16 aufgebracht. Auf dem Füllrohr 20' ist ein Mitnehmerring 22 angeordnet. Dieser Mitnehmerring 22 ist mittels des Darmschiebers 21 in Axialrichtung verschiebbar. Der Darmschieber 21 kann beispielsweise mittels Aktuatoren ansteuerbar sein. Im Betrieb ist es damit möglich, die Hülle 16 während des Befüllens derselben in Richtung des Darmbremssystems 24 nachzuschieben. Ein solches Nachschieben ist erforderlich, da die geraffte, schlauchförmige Hülle 16 während des Befüllens entrafft und verarbeitet wird.

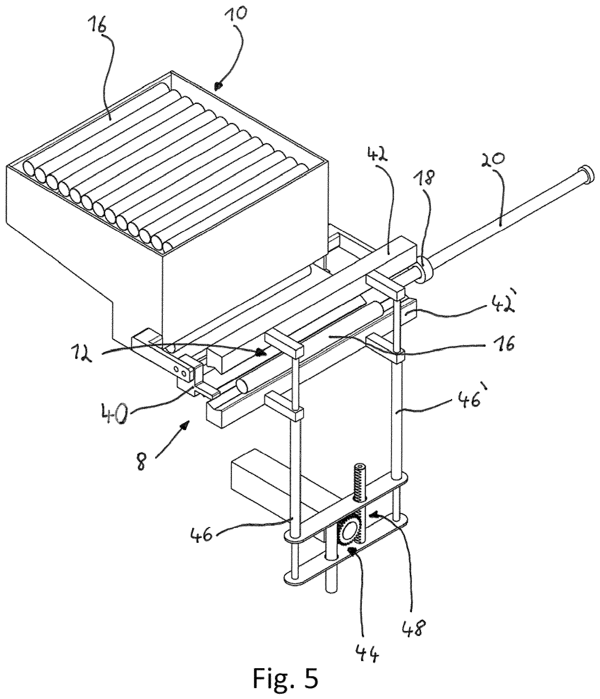

In den Figuren 5 bis 8 ist die Bestückungsvorrichtung während der Abfolge aufeinanderfolgender Verfahrensschritte gezeigt. In Fig. 5 gelangt zunächst aus dem Hüllenmagazin 10 eine Hülle 16 auf das untere Greifelement 42'. Die Greifelemente 42, 42' befinden sich in einem geöffneten Zustand. Ferner befindet sich der Mitnehmerring 18 in einer Position nahe dem offenen Ende des Füllrohrs 20.

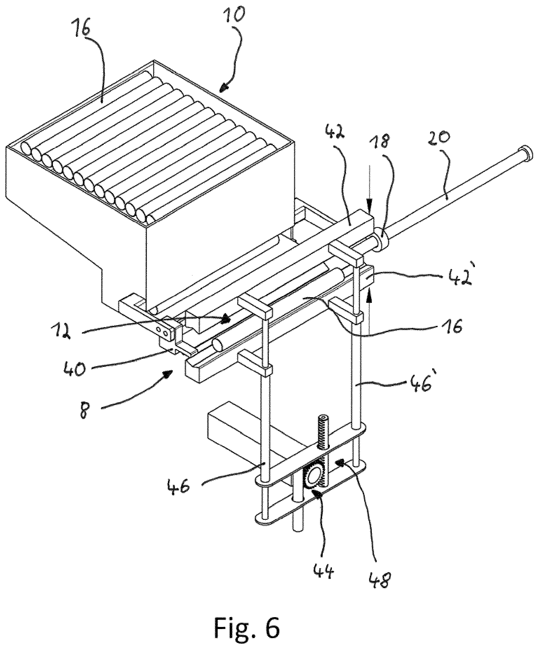

In dem in der Fig. 6 illustrierten Verfahrensschritt werden die Greifelemente 42, 42' mittels der Greifergestänge 46, 46' sowie des Greiferantriebs 44 geschlossen.

Die Detektiereinrichtung 48 sensiert die Position der Greifelemente 42, 42' und die auftretenden Schließkräfte. Wäre die Hülle 16 beispielsweise auf dem unteren Greifelement 42' fehlerhaft angeordnet, oder würden beispielsweise mehrere Hüllen 16 auf dem unteren Greifelement 42' aufliegen, so wäre es denkbar, dass sich beispielsweise die zum Schließen der Greifelemente 42, 42' erforderliche Kraft erhöhen würde, ohne dass die Greifelemente 42, 42' soweit geschlossen wären, wie dieses für den verwendeten Hüllendurchmesser 16 zu erwarten wäre. In einem solchen Fall könnte auf Basis der mittels der Detektiereinrichtung 48 sensierten Daten eine fehlerhafte Beladung der Greifelemente 42, 42' detektiert werden.

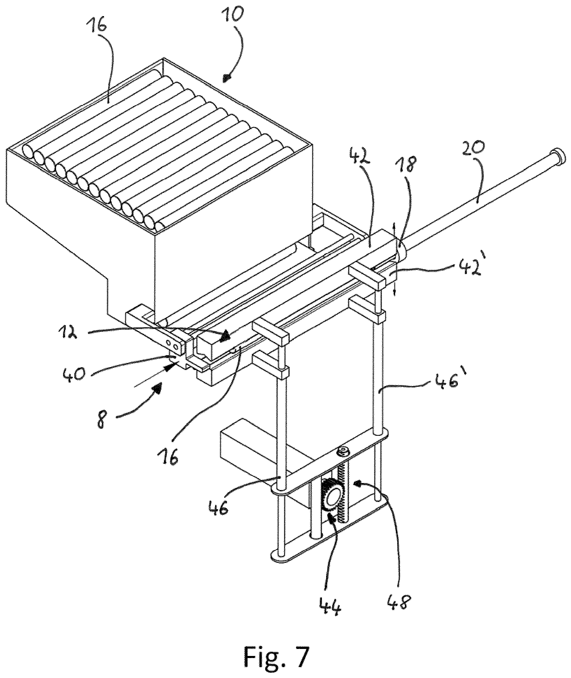

Bezugnehmend auf Fig. 7 ist ein Verfahrensschritt gezeigt, bei dem die Greifelemente 42, 42' die Hülle 16 nunmehr umschließen. Die Hülle 16 ist nun vor dem Füllrohr 20 zentriert. Mithilfe des Greiferantriebs 44 und vermittels der Greifergestänge 46,46' werden die Greifelemente 42, 42' nunmehr so weit geöffnet, dass die Hülle 16 zwar noch mittels der Greifelemente 42, 42' geführt wird, von diesen jedoch nicht länger festgehalten wird. Der Aufschieber 40 schiebt die Hülle 16 auf das Füllrohr 20 auf und schiebt gleichsam den Mitnehmerring 18 mittels der Hülle 16 auf das Füllrohr 20 auf. Die Greifelemente 42, 42' stützen und führen die Hülle 16, wobei die Hülle 16 wiederum das Füllrohr 20 stützt und zentriert.

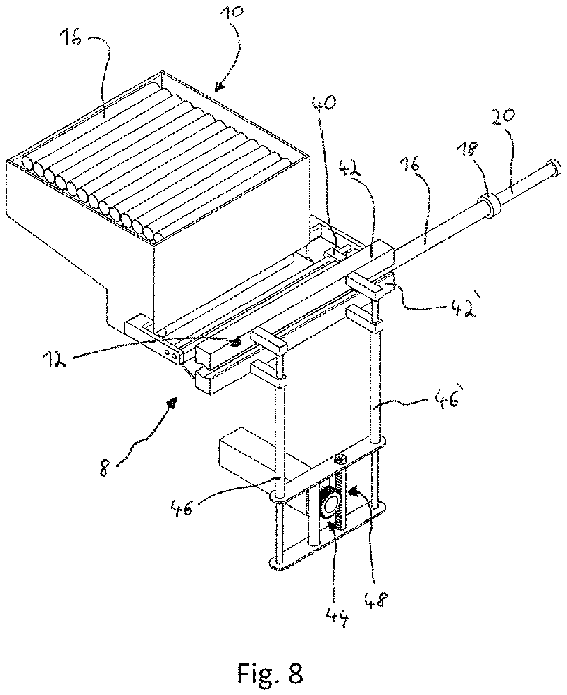

In der Fig. 8 ist jener Zustand gezeigt, bei dem die Hülle 16 nahezu vollständig auf das Füllrohr 20 aufgeschoben ist. Der Aufschieber 40 befindet sich hier nahe seiner Endposition. Der Aufschieber 40 kann ebenfalls mit einer Detektiereinrichtung verbunden sein (nicht in der Abbildung dargestellt). In diesem Fall können die beim Aufschieben erforderlichen Kräfte Rückschlüsse dahingehend zulassen, inwieweit die Hülle 16 fehlerfrei auf das Füllrohr 20 aufgeschoben ist. Verkantet sich beispielsweise die Hülle 16 während des Aufschiebens, so erhöht sich typischerweise die zum Aufschieben erforderliche Kraft. Darüber hinaus ist es denkbar, dass die Detektiereinrichtung 48 eine Öffnungskraft bezogen auf die Greifelemente 42, 42' während des Aufschiebens der Hülle 16 auf das Füllrohr 20 detektiert, falls sich die Hülle 16 während des Aufschiebens verkantet oder dergleichen. Somit ermöglicht es eine Sensierung von Position und Betriebskräften der Greifelemente 42, 42' sowie des Aufschiebers 40, Rückschlüsse auf einen fehlerfreien beziehungsweise fehlerhaften Bestückungsprozess des Füllrohrs 20 zu ziehen.

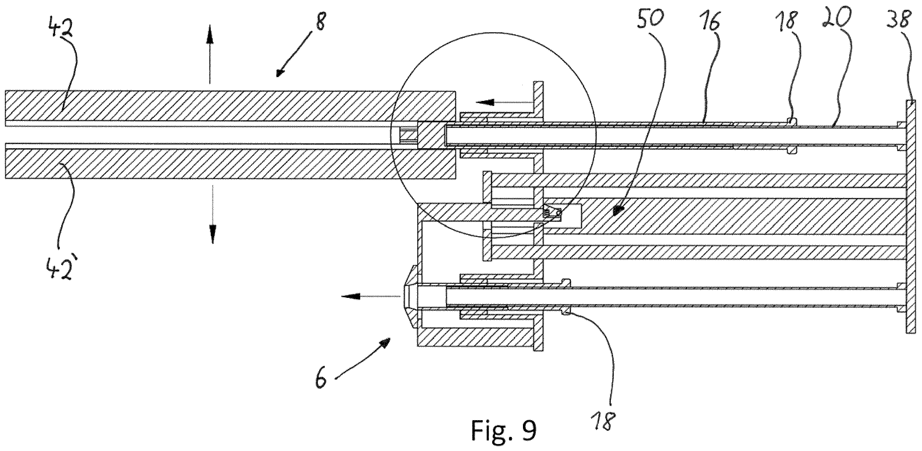

Figur 9 zeigt ein alternatives Ausführungsbeispiel einer Maschine zum Füllen schlauchförmiger Hüllen in einer Schnittdarstellung. Die Maschine weist eine nicht näher detaillierte Stützeinheit 50 auf. Wie der Figur entnommen werden kann, umgreifen die Greifelemente 42, 42' die Hülle 16. Die Hülle 16 wird zentriert und eventuelle Verformungen zumindest teilweise ausgeglichen. Die Greifelemente 42, 42' umschließen ferner zumindest indirekt auch das Füllrohr 20. Da jedoch der Durchmesser der Hüllen 16 größer ist als der Durchmesser des Füllrohrs 20, treten die Greifelemente 42, 42' in keinen direkten Kontakt mit dem Füllrohr 20. Während des Aufbringens einer Hülle 16 auf das Füllrohr 20 stützen und führen die Greifelemente 42, 42' die Hülle 16 und die Hülle 16 wiederum stützt und zentriert das Füllrohr 20.

### Liste der verwendeten Bezugszeichen

- 2: Vorsatzgerät
- 4: Maschine
- 6: Füllvorrichtung
- 8: Füllrohrbestückungsvorrichtung
- 9: Zuführeinrichtung
- 10: Hüllenmagazin
- 12: Hüllengreifeinrichtung
- 14: Fördereinrichtung
- 16: Hülle
- 18: Mitnehmerring
- 20, 20': Füllrohr
- 21: Darmschieber
- 22: Mitnehmerring
- 24: Darmbremssystem
- 26: Wurst
- 28, 28': Förderelement
- 30: Abdrehkopf
- 32: Abgaberohr
- 34: Extrusionskopf
- 36: Fülltrichter
- 38: Aufnahmeteil
- 40: Aufschieber
- 42: Oberes Greifelement
- 42': Unteres Greifelement
- 44: Greiferantrieb
- 46, 46': Greifergestänge
- 48: Detektiereinrichtung
- 50: Stützeinheit

## Patentansprüche

1. Vorrichtung (8) zum Bestücken eines Füllrohrs (20, 20') mit einer gerafften, schlauchförmigen Hülle (16), mit
- einer Zuführeinrichtung (9) zum Zuführen einer gerafften, schlauchförmigen Hülle (16) zu einer Hüllengreifeinrichtung (12),
- einer Hüllengreifeinrichtung (12) mit Greifelementen (42, 42') zum Greifen und Ausrichten einer gerafften, schlauchförmigen Hülle (16),
- einem axial zu einer Füllrohr-Längsachse bewegbaren Aufschieber (40) zum Aufschieben der Hülle (16) auf ein Füllrohr (20, 20'),
**gekennzeichnet durch** eine den Greifelementen (42, 42') zugeordnete Detektiereinrichtung (48) zur Sensierung der Position mindestens eines der Greifelemente (42, 42').

2. Bestückungsvorrichtung (8) nach Anspruch 1,
**dadurch gekennzeichnet, dass** die Detektiereinrichtung (48) mindestens einen Drehgeber zur Sensierung der Position mindestens eines der Greifelemente (42, 42') aufweist.

3. Bestückungsvorrichtung (8) nach einem der vorhergehenden Ansprüche,
**dadurch gekennzeichnet, dass** die Greifelemente (42, 42') einen Antrieb (44) mit einem Rotor aufweisen, wobei der Antrieb (44) zur Übermittlung der Position des Rotors an die Detektiereinrichtung (48) eingerichtet ist.

4. Bestückungsvorrichtung (8) nach einem der vorhergehenden Ansprüche,
**dadurch gekennzeichnet, dass** die Detektiereinrichtung (48) einen optischen Sensor zur Sensierung der Position der Greifelemente (42, 42') aufweist.

5. Bestückungsvorrichtung (8) nach einem der vorhergehenden Ansprüche,
**dadurch gekennzeichnet, dass** die Detektiereinrichtung (48) einen Kraftsensor zur Ermittlung der an den Greifelementen (42, 42') auftretenden Kräfte eingerichtet ist.

6. Bestückungsvorrichtung (8) nach einem der vorhergehenden Ansprüche,
**gekennzeichnet durch** eine mit der Detektiereinrichtung (48) gekoppelte Steuerungseinrichtung, welche mindestens zur Bestimmung des Hüllendurchmessers der Hüllen (16) eingerichtet ist.

7. Bestückungsvorrichtung (8) nach Anspruch 1,
**dadurch gekennzeichnet, dass** ein Greifelement (42, 42') oder die Greifelemente (42, 42') dazu eingerichtet sind, das Füllrohr (20, 20') abschnittsweise zu umschließen.

8. Bestückungsvorrichtung (8) nach einem der vorhergehenden Ansprüche,
**dadurch gekennzeichnet, dass** die Greifelemente (42, 42') eine Vertiefung entlang ihrer Längsachsen zur Zentrierung und Ausrichtung einer Hülle (16) aufweisen.

9. Bestückungsvorrichtung (8) nach Anspruch 8,
**dadurch gekennzeichnet, dass** die Vertiefung bezogen auf eine Querachse der Greifelemente (42, 42') V-Förmig ausgebildet ist.

10. Bestückungsvorrichtung (8) nach einem der vorhergehenden Ansprüche,
**dadurch gekennzeichnet, dass** der Aufschieber (40) dazu eingerichtet ist, mittels der Bewegung des Aufschiebers (40) beim Aufschieben einer Hülle (16) auf das Füllrohr (20, 20') Verunreinigungen von den Greifelementen (42, 42') abzutragen.

11. Verfahren zum Bestücken eines Füllrohrs (20, 20') mit einer gerafften, schlauchförmigen Hülle (16), mindestens aufweisend die Schritte:
- Öffnen eines oberen und/oder eines unteren Greifelements (42, 42') einer Hüllengreifeinrichtung ;
- Zuführen einer gerafften, schlauchförmigen Hülle (16) zu dem unteren Greifelement (42, 42');
- Schließen der Greifelemente (42, 42'), bis das obere Greifelement (42) mit der Hülle (16) in Kontakt tritt;
**gekennzeichnet durch**
- Sensierung der Position mindestens eines Greifelementes (42, 42');
- Ermittlung des Durchmessers der zugeführten Hülle (16) auf Basis der sensierten Position des oder der Greifelemente (42, 42').

12. Verfahren nach Anspruch 11,
zusätzlich aufweisend die Schritte:
- Ausrichtung und Zentrierung der Hülle (16) relativ zur Axialrichtung eines Füllrohrs (20, 20'), wobei die Greifelemente (42, 42') das Füllrohr (20, 20') abschnittsweise umschließen;
- Partielles Öffnen der Greifelemente (42, 42');
- Geführtes Aufschieben der Hülle (16) auf das Füllrohr (20, 20') mittels eines Aufschiebers (40).

13. Verfahren nach Anspruch 12,
zusätzlich aufweisend die Schritte:
- Schließen der Greifelemente (42, 42'), bis diese mit dem Füllrohr (20, 20') zumindest abschnittsweise in Kontakt treten;
- Sensierung der Position mindestens eines der Greifelemente (42, 42');
- Ermittlung des Durchmessers des Füllrohrs (20, 20') auf Basis der sensierten Position des oder der Greifelemente (42, 42').

14. Verfahren nach einem der Ansprüche 11 - 13,
weiterhin aufweisend den Schritt:
- Detektion einer fehlerhaften Beladung einer Hüllengreifeinrichtung (12), insbesondere wenn:
- keine Hülle (16) in die Hüllengreifeinrichtung (12) eingelegt ist, oder
- mehrere Hüllen (16) von der Hüllengreifeinrichtung (12) erfasst worden sind, oder
- eine Hülle (16) fehlerhaft in die Hüllengreifeinrichtung (12) eingelegt ist, oder
- der Hüllendurchmesser von einem vordefinierten Hüllendurchmesser abweicht.

## Claims

1. Apparatus (8) for equipping a filling tube (20, 20') with a gathered tubular case (16), comprising
- a feed device (9) for feeding a gathered tubular case (16) to a case gripping device (12),
- a case gripping device (12) having gripping elements (42, 42') for gripping and orienting a gathered tubular case (16), and
- a pushing-on member (40) moveable axially relative to a filling tube longitudinal axis for pushing the case (16) on to a filling tube (20, 20'),
**characterised by** a detecting device (48) associated with the gripping elements (42, 42') for sensing the position of at least one of the gripping elements (42, 42').

2. An equipping apparatus (8) as set forth in claim 1
**characterised in that** the detecting device (48) has at least one rotary encoder for sensing the position of at least one of the gripping elements (42, 42').

3. An equipping apparatus (8) as set forth in one of the preceding claims
**characterised in that** the gripping elements (42, 42') have a drive (44) having a rotor, wherein the drive (44) is adapted for communicating the position of the rotor to the detecting device (48).

4. An equipping apparatus (8) as set forth in one of the preceding claims
**characterised in that** the detecting device (48) has an optical sensor for sensing the position of the gripping elements (42, 42').

5. An equipping apparatus (8) as set forth in one of the preceding claims
**characterised in that** the detecting device (48) is a force sensor adapted for ascertaining the forces occurring at the gripping elements (42, 42').

6. An equipping apparatus (8) as set forth in one of the preceding claims
**characterised by** a control device which is coupled to the detecting device (48) and which is adapted at least for determining the case diameter of the cases (16).

7. An equipping apparatus (8) as set forth in claim 1
**characterised in that** a gripping element (42, 42') or the gripping elements (42, 42') are adapted to portion-wise encircle the filling tube (20, 20').

8. An equipping apparatus (8) as set forth in one of the preceding claims
**characterised in that** the gripping elements (42, 42') have a recess along their longitudinal axes for centering and orienting a case (16).

9. An equipping apparatus (8) as set forth in claim 8
**characterised in that** the recess is of a V-shaped configuration with respect to a transverse axis of the gripping elements (42, 42').

10. An equipping apparatus (8) as set forth in one of the preceding claims
**characterised in that** the pushing-on member (40) is adapted by means of the movement of the pushing-on member (40) when pushing a case (16) on to the filling tube (20, 20') to remove impurities from the gripping elements (42, 42').

11. A method of equipping a filling tube (20, 20') with a gathered tubular case (16), at least comprising the steps:
- opening an upper and/or a lower gripping element (42, 42') of a case gripping device;
- feeding a gathered tubular case (16) to the lower gripping element (42, 42');
- closing the gripping elements (42, 42') until the upper gripping element (42) comes into contact with the case (16);
**characterized by**
- sensing the position of at least one gripping element (42, 42'); and
- ascertaining the diameter of the fed case (16) on the basis of the sensed position of the gripping element or elements (42, 42').

12. A method as set forth in claim 11
additionally comprising the steps:
- orienting and centering the case (16) relative to the axial direction of a filling tube (20, 20'), wherein the gripping elements (42, 42') portion-wise encircle the filling tube (20, 20'),
- partially opening the gripping elements (42, 42'); and
- guidedly pushing the case (16) on to the filling tube (20, 20') by means of a pushing-on member (40).

13. A method as set forth in claim 12
additionally comprising the steps:
- closing the gripping elements (42, 42') until they come into at least portion-wise contact with the filling tube (20, 20');
- sensing the position of at least one of the gripping elements (42, 42'); and
- ascertaining the diameter of the filling tube (20, 20') on the basis of the sensed position of the gripping element or elements (42, 42').

14. A method as set forth in one of claims 11 through 13 further comprising the step:
- detecting defective loading of a case gripping device (12), in particular when:
- no case (16) is put into the case gripping device (12), or
- a plurality of cases (16) have been engaged by the case gripping device (12), or
- a case (16) is defectively put into the case gripping (12), or
- the case diameter differs from a predefined case diameter.

## Revendications

1. Dispositif (8) servant à équiper un tuyau de remplissage (20, 20') avec une gaine (16) en forme de tuyau flexible, plissée,
- d'un système d'amenée (9) servant à amener une gaine (16) en forme de tuyau flexible, plissée, à un système de préhension de gaine (12),
- d'un système de préhension de gaine (12) avec des éléments de préhension (42, 42') servant à saisir et à orienter une gaine (16) en forme de tuyau flexible, plissée,
- d'un système d'enfilage (40) pouvant être déplacé de manière axiale par rapport à un axe longitudinal de tuyau de remplissage, servant à enfiler la gaine (16) sur un tuyau de remplissage (20, 20'),
**caractérisé par** un dispositif de détection (48) associé aux éléments de préhension (42, 42'), servant à détecter la position d'au moins un des éléments de préhension (42, 42').

2. Dispositif d'équipement (8) selon la revendication 1,
**caractérisé en ce que** le système de détection (48) présente au moins un capteur rotatif servant à détecter la position d'au moins un des éléments de préhension (42, 42').

3. Dispositif d'équipement (8) selon l'une quelconque des revendications précédentes,
**caractérisé en ce que** les éléments de préhension (42, 42') présentent un entraînement (44) avec un rotor, dans lequel l'entraînement (44) est conçu pour transmettre la position du rotor au niveau du système de détection (48).

4. Dispositif d'équipement (8) selon l'une quelconque des revendications précédentes,
**caractérisé en ce que** le système de détection (48) présente un capteur optique servant à détecter la position des éléments de préhension (42, 42').

5. Dispositif d'équipement (8) selon l'une quelconque des revendications précédentes,
**caractérisé en ce que** le système de détection (48) est conçu sous la forme d'un capteur de force servant à déterminer les forces apparaissant au niveau des éléments de préhension (42, 42').

6. Dispositif d'équipement (8) selon l'une quelconque des revendications précédentes,
**caractérisé par** un système de commande couplé au système de détection (48), lequel est conçu au moins pour définir le diamètre de gaine des gaines (16).

7. Dispositif d'équipement (8) selon la revendication 1,
**caractérisé en ce qu'**un élément de préhension (42, 42') ou les éléments de préhension (42, 42') sont conçus pour enserrer par endroits le tuyau de remplissage (20, 20').

8. Dispositif d'équipement (8) selon l'une quelconque des revendications précédentes,
**caractérisé en ce que** les éléments de préhension (42, 42') présentent un renfoncement le long de leurs axes longitudinaux servant à centrer et orienter une gaine (16).

9. Dispositif d'équipement (8) selon la revendication 8,
**caractérisé en ce que** le renfoncement est réalisé en forme de V par rapport à un axe transversal des éléments de préhension (42, 42').

10. Dispositif d'équipement (8) selon l'une quelconque des revendications précédentes,
**caractérisé en ce que** le système d'enfilage (40) est conçu pour enlever des impuretés des éléments de préhension (42, 42') au moyen du déplacement du système d'enfilage (40) lorsqu'une gaine (16) est enfilée sur le tuyau de remplissage (20, 20').

11. Procédé servant à équiper un tuyau de remplissage (20, 20') avec une gaine (16) en forme de tuyau flexible, plissée, présentant au moins les étapes :
- d'ouverture d'un élément de préhension (42, 42') supérieur et/ou inférieur d'un système de préhension de gaine ;
- d'amenée d'une gaine (16) en forme de tuyau flexible, plissée, à l'élément de préhension (42, 42') inférieur ;
- de fermeture des éléments de préhension (42, 42') jusqu'à ce que l'élément de préhension supérieur (42) entre en contact avec la gaine (16) ;
**caractérisé par**
- la détection de la position d'au moins un élément de préhension (42, 42') ;
- la détermination du diamètre de la gaine (16) amenée sur la base de la position détectée du ou des éléments de préhension (42, 42').

12. Procédé selon la revendication 11,
présentant en supplément les étapes :
- d'orientation et de centrage de la gaine (16) par rapport à la direction axiale d'un tuyau de remplissage (20, 20'), dans lequel les éléments de préhension (42, 42') enserrent par endroits le tuyau de remplissage (20, 20') ;
- d'ouverture partielle des éléments de préhension (42, 42') ;
- d'enfilage guidé de la gaine (16) sur le tuyau de remplissage (20, 20') au moyen d'un système d'enfilage (40).

13. Procédé selon la revendication 12,
présentant en supplément les étapes :
- de fermeture des éléments de préhension (42, 42') jusqu'à ce que ceux-ci entrent au moins par endroits en contact avec le tuyau de remplissage (20, 20') ;
- de détection de la position d'au moins un des éléments de préhension (42, 42') ;
- de détermination du diamètre du tuyau de remplissage (20, 20') sur la base de la position détectée du ou des éléments de préhension (42, 42').

14. Procédé selon l'une quelconque des revendications 11 à 13,
présentant par ailleurs l'étape :
- de détection d'un chargement défectueux d'un système de préhension de gaine (12), en particulier quand :
- aucune gaine (16) n'est placée dans le système de préhension de gaine (12), ou
- plusieurs gaines (16) ont été détectées par le système de préhension de gaine (12), ou
- une gaine (16) est placée de manière défectueuse dans le système de préhension de gaine (12), ou
- le diamètre de gaine diverge d'un diamètre de gaine prédéfini.
